# EUROPEAN PATENT APPLICATION

(11) **EP 4 530 874 A1**
(43) Date of publication of application: **02.04.2025**
(21) Application number: 24188578.9
(22) Date of filing: 15.07.2024
(51) Int. Cl.: G06F 15/78, H04L 49/109

(54) **CIRCUITS AND METHODS FOR MULTI-LAYERED NETWORKS**

(30) Priority: 29.09.2023 US 202318478755
(71) Applicant: INTEL Corporation, Santa Clara, CA 95054 (US)
(72) Inventor: PAL, Rahul, 560037 Bangalore, Karnataka (IN); GUPTA, Ashish, San Jose CA, 95129 (US); OH, Keong Hong, Bayan Lepas (MY); NGO, Gia Thuyet, 11900 Bayan Lepas (MY); KAPILA, Vikrant, 328689 Singapore (SG); ROY, Ankita, 700157 Kolkata, West Bengal (IN)
(74) Representative: Viering, Jentschura & Partner mbB Patent- und Rechtsanwälte

(57) **Abstract**

An integrated circuit includes a core region of logic circuits and a network routed outside the core region. The network includes a wide layer and a narrow layer. The wide layer comprises first routers coupled in series. The narrow layer comprises second routers coupled in series.

## Description

### TECHNICAL FIELD

The present disclosure relates to electronic circuit systems and methods, and more particularly, to circuits and methods for multi-layered networks.

### BACKGROUND

Configurable integrated circuits can be configured by users to implement desired custom logic functions. In a typical scenario, a logic designer uses computer-aided design (CAD) tools to design a custom circuit design. When the design process is complete, the computer-aided design tools generate configuration data. The configuration data is then loaded into configuration memory elements that configure configurable logic circuits in the integrated circuit to perform the functions of the custom circuit design. Configurable logic integrated circuits can be used for co-processing in big-data or fast-data applications. For example, configurable logic integrated circuits may be used in application acceleration tasks in a datacenter and may be reprogrammed during datacenter operation to perform different tasks.

### BRIEF DESCRIPTION OF DRAWINGS

Figure 1 is a diagram that illustrates an example of an integrated circuit (IC) that includes a core logic region and a network.
Figure 2 is a diagram that illustrates examples of a wide layer and a narrow layer of the network of Figure 1.
Figure 3 is a diagram that illustrates details of an example of one of the bridge circuits coupled to the network shown in Figure 1.
Figure 4 is a diagram of an illustrative example of a configurable integrated circuit (IC).

### DETAILED DESCRIPTION

A hardened network-on-chip (NOC) in a configurable logic integrated circuit (IC) die (e.g., a field programmable gate array or FPGA) facilitates communication between configurable soft logic, memory circuit blocks, hardened transceiver paths, and/or processor circuits in the IC die. To allow the multiple protocols of communication between these entities to be transferred through a common NOC, FPGA NOCs commonly use a Flit-based architecture, in which all signal transfers are packetized into Flits. A flit (flow control units/digits) is a unit of information that forms part of a network packet or stream transmitted through a link. A flit includes a header that includes routing information about the packet and packet data. In such an architecture, there are inefficiencies on achievable NOC bandwidth for a given expense of wires (e.g., area and power consumption) due to transfer of header flits, such as routing information, and control flits, such as request address, request attributes, and a response header.

According to some examples disclosed herein, a multi-layered network (e.g., a NOC) is provided in an integrated circuit (IC). In a particular example, the network is a double-layered network having wide and narrow layers. The wide layer supports packets sized to carry a header, control information, and a data payload. The narrow layer support packets sized to carry a header and control information. The headers can be out-of-band headers. The layers are asynchronously routed with respect to each other through the IC. The network can support packets organized according to any suitable networking standard or configuration, such as Flit.

One or more specific examples are described below. In an effort to provide a concise description of these examples, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Throughout the specification, and in the claims, the term "connected" means a direct electrical connection between the circuits that are connected, without any intermediary devices. The term "coupled" means either a direct electrical connection between circuits or an indirect electrical connection through one or more passive or active intermediary devices that allows the transfer of information between circuits. The term "circuit" may mean one or more passive and/or active electrical components that are arranged to cooperate with one another to provide a desired function.

This disclosure discusses integrated circuit devices, including configurable (programmable) logic integrated circuits, such as field programmable gate arrays (FPGAs). As discussed herein, an integrated circuit (IC) can include hard logic and/or soft logic. As used herein, "hard logic" generally refers to circuits in an integrated circuit device that are not configurable by an end user. The circuits in an integrated circuit device (e.g., in a configurable logic IC) that are configurable by the end user are referred to as "soft logic."

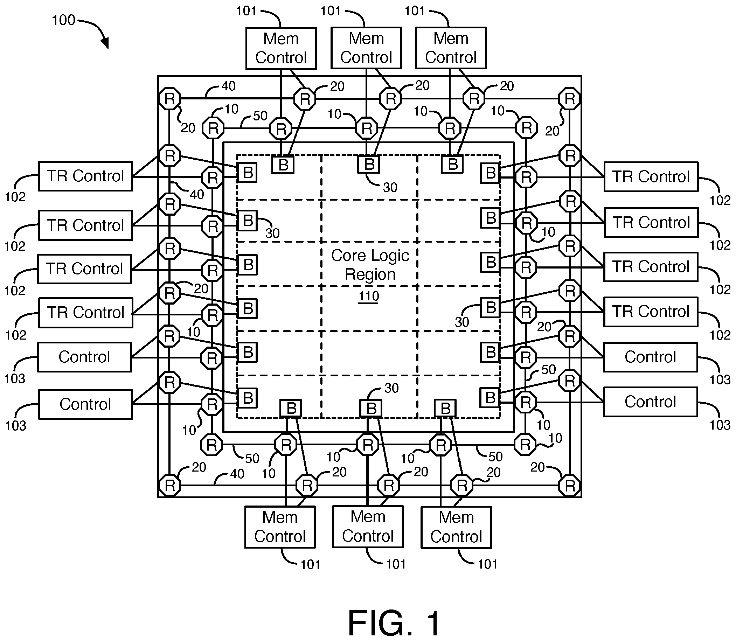

Figure 1 is a diagram that illustrates an example of an integrated circuit (IC) 100 that includes a core logic region 110 and a network. The network is a double-layered link having a wide layer and a narrow layer that are routed around the periphery of the core logic region 110. The narrow layer of the network includes router circuits 20 that are couped together in an outer ring configuration by conductors 40. The wide layer of the network includes router circuits 10 that are coupled together in an inner ring configuration by conductors 50. The numbers of the routers in the wide and narrow layers in FIG. 1 are shown as examples. In other examples, each of the wide and narrow layers can have any number of routers.

Figure (FIG.) 1 also includes memory control (mem. control) circuits 101, transceiver (TR) control circuits 102 (e.g., Peripheral Component Interconnect Express or PCIE, Ethernet, etc.), and control circuits 103 (e.g., accelerator control circuits) located around the periphery of the network. Each of the components shown in Figure (FIG.) 1, including core logic region 110, the network, and circuits 101-103 can be in the single integrated circuit 100. In this example, control circuits 101, 102, and 103 are located in a peripheral region of IC 100. In alternative examples, some or all of the control circuits 101-103 can be in one or more integrated circuits that are separate from IC 100. Integrated circuit 100 can be, as examples, a configurable logic integrated circuit (IC) (e.g., a field programmable gate array or FPGA), a microprocessor IC (e.g., central processing unit or CPU), a graphics processing unit (GPU) IC, an application specific integrated circuit (ASIC), a memory IC, etc.

The core logic region 110 of the IC 100 can include blocks of logic circuits. The circuits in core logic region 110 can be configurable logic circuits in the example of a configurable logic integrated circuit. Core logic region 110 also includes bridge circuits 30 that are coupled to routers 10 in the wide layer of the network and to routers 20 in the narrow layer of the network, as shown by the connections in FIG. 1. Subsets of the routers 10 and 20 are coupled to the memory control circuits 101, transceiver control circuits 102, or control circuits 103, as shown by the connections in FIG. 1. The routers 10 in the wide layer of the network are coupled together in series and can transmit packets through the conductors 50 between one or more of the bridge circuits 30 and one or more of the memory control circuits 101, the transceiver control circuits 102, and/or the control circuits 103. The routers 20 in the narrow layer of the network are coupled together in series and can transmit packets through the conductors 40 between one or more of the bridge circuits 30 and one or more of the memory control circuits 101, the transceiver control circuits 102, and/or the control circuits 103. Any of the bridge circuits 30, memory control circuits 101, transceiver control circuits 102, and/or control circuits 103 can be source circuits or destination circuits for the packets transmitted through the wide or narrow layers of the network.

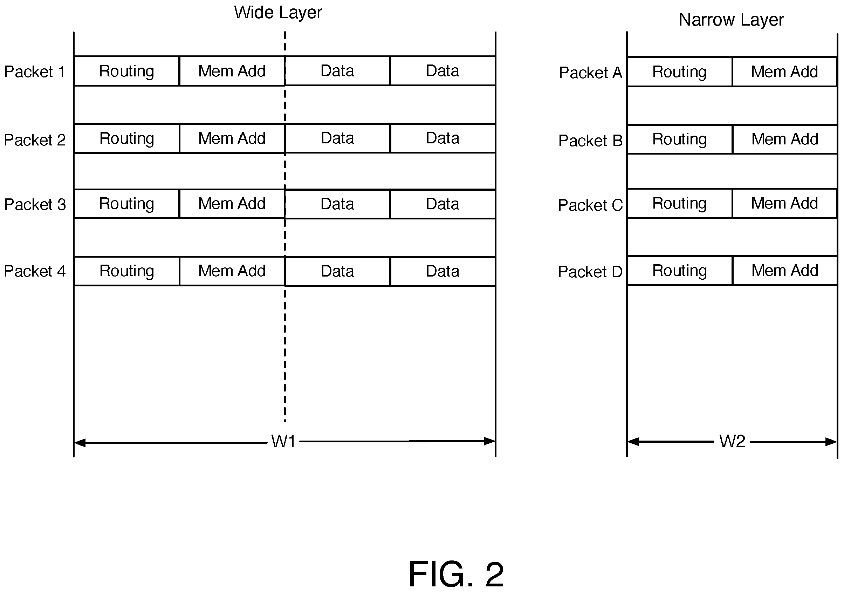

The network of FIG. 1 is a double-layered link having a wide layer that includes routers 10 coupled together by conductors 50 and a narrow layer that includes router circuits 20 couped together by conductors 40. Figure 2 is a diagram that illustrates examples of packets transmitted through the wide layer and the narrow layer of the network of FIG. 1. As shown in FIG. 2, the width W1 of the wide layer is the width of a single packet that includes a header (e.g., routing information) plus control information (e.g., memory addresses) plus a data payload. Memory addresses are abbreviated as Mem Add in FIG. 2. The header, control information, and data in each packet are transmitted in parallel in 2 or more different channels in the wide layer. Four packets referred to as packet 1, packet 2, packet 3, and packet 4 are shown as being transmitted through the wide layer in the example of FIG. 2. In other examples, the wide layer can transmit any other number of packets. The wide layer is used for transmitting write requests and read responses with respect to memory-mapped transfers. The wide layer is also used to transmit wide streaming communication packets between agents, such as circuits in core logic region 110 and control circuits 101-103.

The width W2 of the narrow layer is the width of a packet that includes a header (e.g., routing information) and control information (e.g., memory addresses). The header and control information in each packet are transmitted in parallel in 2 different channels in the narrow layer. Four packets referred to as packet A, packet B, packet C, and packet D are shown as being transmitted through the narrow layer in the example of FIG. 2. In other examples, the narrow layer can transmit any other number of packets. The narrow layer is used for transmitting read requests and write responses with respect to memory-mapped transfers. The narrow layer is also used for transmitting narrow streaming communication packets between agents, such as circuits in core logic region 110 and control circuits 101-103.

In a specific implementation that is not intended to be limiting, the network of FIGS. 1-2 is based on an architecture for a flit-based network-on-chip (NOC) in which header and control information are transferred out of band in the flit. According to this specific implementation, both of the wide and narrow layers can be flit-based layers that support associated flit widths. The wide and narrow layers have independent router networks as shown in FIG. 1 and transfer packets asynchronously with respect to each other. The wide and narrow layers of the network share a common network clock signal and can operate at the same clock signal frequency. Each of the wide and narrow layers can support multiple virtual channels that are used to transfer various types of packets.

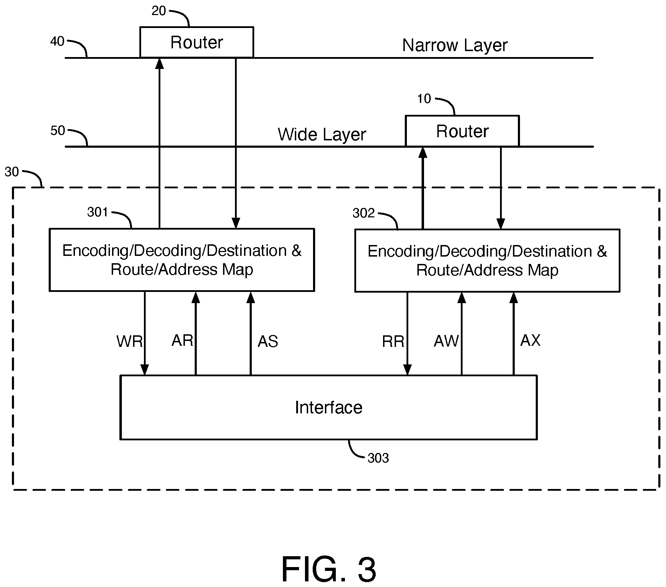

Figure 3 is a diagram that illustrates details of an example of one of the bridge circuits 30 coupled to the network shown in FIG. 1. As discussed above, both of the wide and narrow layers of the network of FIG. 1 are accessed by agents via the bridge circuits 30. Each of the bridge circuits 30 provides common address mapping, network destination and route determination, Quality of Service (QOS) control functions, and other resources for flits sent via either layer of the network. In the example shown in FIG. 3, the bridge circuit 30 includes circuits 301-302 and interface circuit 303. The interface circuit 303 can be in communication with agents in the core logic region 110, such as memory circuits, soft logic, hard logic, processor circuits, digital signal processing circuits, etc. The interface circuit 303 can, for example, include a universal interface for different types of requests, an interface protocol assignment that assigns a transmission protocol to each packet transmitted through the network, QOS control functions for managing priorities of different requests, and flow control handshake functions to prevent overloading the network.

The interface circuit 303 can generate various requests that are provided to one or both of the wide layer and/or the narrow layer in the network. As examples, the interface circuit 303 can generate read requests AR for memory-mapped transfers and narrow streaming communication packets AS that are provided to router 20 through circuit 301 for transfer through the narrow layer of the network to destination circuits from source circuits in the core logic region 110. Circuit 301 provides NOC destination and routing computations that determine the paths to route the read requests AR and the packets AS through the narrow layer to the destination circuits. Circuit 301 can also provide address mapping to the memory space at the destination circuit for each read request AR. Circuit 301 can encode the read requests AR and communication packets AS into packets that can be transmitted through the network (e.g., using Flit encoding). Circuit 301 can also provide asynchronous clock crossing to convert the read requests AR and communication packets AS from one clock signal domain to another clock signal domain. Circuit 301 can also perform data rate matching to convert the read requests AR and communication packets AS into a data rate supported by the narrow layer.

As other examples, the interface circuit 303 can generate write requests AW for memory-mapped transfers and wide streaming communication packets AX that are provided to router 10 through circuit 302 for transfer through the wide layer of the network to destination circuits from source circuits in the core logic region 110. Circuit 302 provides NOC destination and routing computations that determine the paths to route the write requests AW and the packets AX through the wide layer to the destination circuits. Circuit 302 can also provide address mapping to the memory space at the destination circuit for each write request AW. Circuit 302 can also encode the write requests AW and communication packets AX into packets that can be transmitted through the network (e.g., using Flit encoding). Circuit 302 can also provide asynchronous clock crossing to convert the write requests AW and communication packets AX from one clock signal domain to another clock signal domain. Circuit 302 can also perform data rate matching to convert the write requests AW and communication packets AX into a data rate supported by the wide layer.

The network can also transmit responses RR to the read requests through the wide layer from router 10 to interface circuit 303 through circuit 302. Circuit 302 can provide asynchronous clock crossing, data rate matching, and packet decoding (e.g., Flit decoding) for the read responses. The network can also transmit responses WR to the write requests through the narrow layer from router 20 to interface circuit 303 through circuit 301. Circuit 301 can provide asynchronous clock crossing, data rate matching, and packet decoding (e.g., Flit decoding) for the write responses. The responses RR and WR are transmitted through the network and the bridge circuit 30 from the destination circuits to the source circuits in the core logic region 110.

The network of FIGS. 1-3 provides bandwidth efficiency and better utilization than a single layered network-on-chip (NOC) with an out of band header. As an example, the header information is 32 bits (b), the memory request packets (control information) are 128 b, and the data payload is 572 b (512 b data and 64 b error correction). If a single layered NOC (with the out of band header) of 732 bits (b) is deployed, 2 reads and 2 writes in the direction from agent to memory requires 4 NOC transfer slots, where 2 packets of data payload are transferred. The efficiency of the single layered NOC with the out of band header is (2*512)/(4*732) = 35%.

A double layered NOC with a 160 b layer plus a 732 b layer only uses 2 transfer slots on each NOC layer in the direction from agent to memory. The efficiency is (2*512)/(2*(160+732)) = 57%. If the ratio is 3 reads to 1 write, the efficiency improves from ((1*512)/(4*732)) = 17% on the single layered NOC using 4 transfer slots to ((1*512)/(3*(160+732))) = 19% on the double layered NOC using 3 transfer slots on each layer. However, if the 2 empty transfer slots on the wide layer in the double layered NOC are utilized for other (512 b) wide streaming transfers, then efficiency improvement is from 17% (for the single layered NOC) to ((3*512)/(3*(160+732))) = 57% (for the double layered NOC).

If the ratio is 1 read to 3 writes, the efficiency improves from ((3*512)/(4*732)) = 52% on the single layered NOC with the out of band header using 4 transfer slots to ((3*512)/(3*(160+732))) = 57% on the double layered NOC using 3 transfer slots on each layer. But if the 2 empty transfer slots on the narrow layer in the double layered NOC are utilized for other (128 b) narrow streaming transfers, then the efficiency improvement is from 52% (for the single layered NOC) to ((3*512 + 2*128)/(3*(160+732))) = 67% (for the double layered NOC). A similar case can be made on the reverse direction bus used for responses from memory to agent. An in-band header single layered NOC can achieve high bandwidth efficiencies by using large data payloads, but the in-band header single layered NOC is plagued with other issues, such as the need for wormhole routing that keeps all packets together, which causes starvation and long wait times for other initiators.

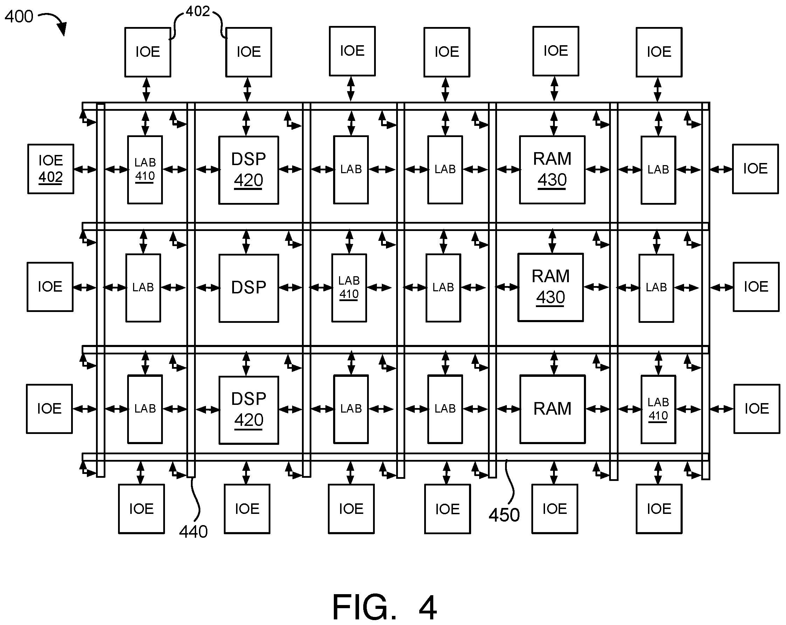

Figure 4 is a diagram of an illustrative example of a configurable logic integrated circuit (IC) 400. Configurable logic IC 400 (also referred to herein simply as configurable IC 400) is an example of an IC die as disclosed herein, such as IC die 100. As shown in FIG. 4, the configurable logic integrated circuit 400 includes a two-dimensional array of functional blocks (e.g., in core logic region 110 of IC 100), including logic array blocks (LABs) 410 and other functional blocks, such as random access memory (RAM) blocks 430 and digital signal processing (DSP) blocks 420, for example. Functional blocks, such as LABs 410, may include smaller programmable regions (e.g., logic elements, configurable logic blocks, or adaptive logic modules) that receive input signals and perform custom functions on the input signals to produce output signals.

In addition, the configurable logic integrated circuit 400 may have input/output elements (IOEs) 402 for driving signals off of configurable integrated circuit 400 and for receiving signals from other devices. Input/output elements 402 may include parallel input/output circuitry, serial data transceiver circuitry, differential receiver and transmitter circuitry, or other circuitry used to connect one integrated circuit to another integrated circuit. As shown, input/output elements 402 may be located around the periphery of the IC. If desired, the configurable integrated circuit 400 may have input/output elements 402 arranged in different ways. For example, input/output elements 402 may form one or more columns of input/output elements that may be located anywhere on the configurable integrated circuit 400 (e.g., distributed evenly across the width of the configurable integrated circuit). If desired, input/output elements 402 may form one or more rows of input/output elements (e.g., distributed across the height of the configurable integrated circuit). Alternatively, input/output elements 402 may form islands of input/output elements that may be distributed over the surface of the configurable integrated circuit 400 or clustered in selected areas.

The configurable integrated circuit 400 may also include programmable interconnect circuitry in the form of vertical routing channels 440 (i.e., interconnects formed along a vertical axis of configurable integrated circuit 400) and horizontal routing channels 450 (i.e., interconnects formed along a horizontal axis of configurable integrated circuit 400), each routing channel including at least one track to route at least one wire.

Note that other routing topologies, besides the topology of the interconnect circuitry depicted in FIG. 4, may be used. For example, the routing topology may include wires that travel diagonally or that travel horizontally and vertically along different parts of their extent as well as wires that are perpendicular to the device plane in the case of three dimensional integrated circuits, and the driver of a wire may be located at a different point than one end of a wire. The routing topology may include global wires that span substantially all of configurable integrated circuit 400, fractional global wires such as wires that span part of configurable integrated circuit 400, staggered wires of a particular length, smaller local wires, or any other suitable interconnection resource arrangement.

Furthermore, it should be understood that examples disclosed herein may be implemented in any type of integrated circuit. If desired, the functional blocks of such an integrated circuit may be arranged in more levels or layers in which multiple functional blocks are interconnected to form still larger blocks. Other device arrangements may use functional blocks that are not arranged in rows and columns.

Configurable integrated circuit 400 may contain programmable memory elements. Memory elements may be loaded with configuration data (also called programming data) using input/output elements (IOEs) 402. Once loaded, the memory elements each provide a corresponding static control signal that controls the operation of an associated functional block (e.g., LABs 410, DSP 420, RAM 430, or input/output elements 402).

In a typical scenario, the outputs of the loaded memory elements are applied to the gates of field-effect transistors in a functional block to turn certain transistors on or off and thereby configure the logic in the functional block including the routing paths. Programmable logic circuit elements that may be controlled in this way include parts of multiplexers (e.g., multiplexers used for forming routing paths in interconnect circuits), look-up tables, logic arrays, AND, OR, NAND, and NOR logic gates, pass gates, etc.

The memory elements may use any suitable volatile and/or non-volatile memory structures such as random-access-memory (RAM) cells, fuses, antifuses, programmable read-only-memory memory cells, mask-programmed and laser-programmed structures, combinations of these structures, etc. Because the memory elements are loaded with configuration data during programming, the memory elements are sometimes referred to as configuration memory or programmable memory elements.

The programmable memory elements may be organized in a configuration memory array consisting of rows and columns. A data register that spans across all columns and an address register that spans across all rows may receive configuration data. The configuration data may be shifted onto the data register. When the appropriate address register is asserted, the data register writes the configuration data to the configuration memory elements of the row that was designated by the address register.

Configurable integrated circuit 400 can include configuration memory that is organized in sectors, whereby a sector may include the configuration RAM bits that specify the function and/or interconnections of the subcomponents and wires in or crossing that sector. Each sector may include separate data and address registers.

The configurable IC of FIG. 4 is merely one example of an IC that can be used with embodiments disclosed herein. The embodiments disclosed herein can be used with any suitable electronic integrated circuit or system. For example, the embodiments disclosed herein can be used with numerous types of electronic devices such as processor integrated circuits, central processing units, memory integrated circuits, graphics processing unit integrated circuits, application specific standard products (ASSPs), application specific integrated circuits (ASICs), and configurable logic integrated circuits. Examples of configurable logic integrated circuits include programmable arrays logic (PALs), programmable logic arrays (PLAs), field programmable logic arrays (FPLAs), electrically programmable logic devices (EPLDs), electrically erasable programmable logic devices (EEPLDs), logic cell arrays (LCAs), complex programmable logic devices (CPLDs), and field programmable gate arrays (FPGAs), just to name a few.

The integrated circuits disclosed in one or more embodiments herein can be part of a data processing system that includes one or more of the following components: a processor; memory; input/output circuitry; and peripheral devices. The data processing system can be used in a wide variety of applications, such as computer networking, data networking, instrumentation, video processing, digital signal processing, or any suitable other application. The integrated circuits can be used to perform a variety of different logic functions.

In general, software and data for performing any of the functions disclosed herein can be stored in non-transitory computer readable storage media. Non-transitory computer readable storage media is tangible computer readable storage media that stores data and software for access at a later time, as opposed to media that only transmits propagating electrical signals (e.g., wires). The software code may sometimes be referred to as software, data, program instructions, instructions, or code. The non-transitory computer readable storage media can, for example, include computer memory chips, non-volatile memory such as non-volatile random-access memory (NVRAM), one or more hard drives (e.g., magnetic drives or solid state drives), one or more removable flash drives or other removable media, compact discs (CDs), digital versatile discs (DVDs), Blu-ray discs (BDs), other optical media, and floppy diskettes, tapes, or any other suitable memory or storage device(s).

Additional examples are now described. Example 1 is an integrated circuit comprising: a core region of logic circuits; and a network routed outside the core region and comprising a wide layer and a narrow layer, wherein the wide layer comprises first routers coupled in series, and wherein the narrow layer comprises second routers coupled in series.

In Example 2, the integrated circuit of Example 1 may optionally include, wherein the narrow layer is routed alongside the wide layer.

In Example 3, the integrated circuit of any one of Examples 1-2 may optionally include, wherein the core region further comprises bridge circuits coupled to the first routers and to the second routers.

In Example 4, the integrated circuit of any one of Examples 1-3 further comprises: control circuits coupled to the first routers and to the second routers.

In Example 5, the integrated circuit of any one of Examples 1-4 may optionally include, wherein the wide layer is configured to route a header, control information, and data.

In Example 6, the integrated circuit of any one of Examples 1-5 may optionally include, wherein the narrow layer is configured to route control information and a header without data.

In Example 7, the integrated circuit of any one of Examples 1-6 may optionally include, wherein the wide layer is configurable to route write requests, responses to read requests, and wide streaming communication packets.

In Example 8, the integrated circuit of any one of Examples 1-7 may optionally include, wherein the narrow layer is configurable to route read requests, responses to write requests, and narrow streaming communication packets.

In Example 9, the integrated circuit of any one of Examples 1-8 may optionally include, wherein the integrated circuit is a configurable logic integrated circuit, and wherein the logic circuits are configurable logic circuits.

Example 10 is a method for routing packets through a network in an integrated circuit, the method comprising: providing first control information and data through a wide layer of the network between a first circuit in a core region of the integrated circuit and a second circuit in a peripheral region of the integrated circuit; and providing second control information through a narrow layer of the network between a third circuit in the core region and a fourth circuit in the peripheral region.

In Example 11, the method of Example 10 may optionally include, wherein providing the first control information and the data through the wide layer comprises providing one of the packets comprising memory addresses, routing information, and the data through the wide layer.

In Example 12, the method of any one of Examples 10-11 may optionally include, wherein providing the second control information through the narrow layer comprises providing one of the packets comprising memory addresses and routing information through the narrow layer without the narrow layer comprising bandwidth to route additional data.

In Example 13, the method of any one of Examples 10-12 further comprises performing clock crossing, data rate matching, encoding, and decoding at the first circuit for the first control information and the data.

In Example 14, the method of any one of Examples 10-13 further comprises performing clock crossing, data rate matching, encoding, and decoding at the third circuit for the second control information.

In Example 15, the method of any one of Examples 10-14 may optionally include, wherein the network is routed around a periphery of the core region.

Example 16 is a network in an integrated circuit, wherein the network comprises: a wide layer comprising first routers configurable to route data bits and control bits between a first source circuit and a first destination circuit; and a narrow layer comprising second routers configurable to route control bits between a second source circuit and a second destination circuit.

In Example 17, the network of Example 16 may optionally include, wherein the first routers are coupled in a first ring configuration around a core region of the integrated circuit, and wherein the second routers are coupled in a second ring configuration around the core region.

In Example 18, the network of any one of Examples 16-17 may optionally include, wherein the second routers are configurable to route the control bits without routing additional data bits between the second source circuit and the second destination circuit.

In Example 19, the network of any one of Examples 16-18 may optionally include, wherein at least one of the first source circuit, the second source circuit, the first destination circuit, or the second destination circuit is a bridge circuit in a core region of the integrated circuit.

In Example 20, the network of any one of Examples 16-19 may optionally include, wherein at least one of the first source circuit, the second source circuit, the first destination circuit, or the second destination circuit is a control circuit in a peripheral region of the integrated circuit.

The foregoing description of the exemplary embodiments has been presented for the purpose of illustration. The foregoing description is not intended to be exhaustive or to be limiting to the examples disclosed herein. The foregoing is merely illustrative of the principles of this disclosure and various modifications can be made by those skilled in the art. The foregoing embodiments may be implemented individually or in any combination.

## Claims

1. An integrated circuit comprising:
a core region of logic circuits; and
a network routed outside the core region and comprising a wide layer and a narrow layer, wherein the wide layer comprises first routers coupled in series, and wherein the narrow layer comprises second routers coupled in series.

2. The integrated circuit of claim 1, wherein the narrow layer is routed alongside the wide layer.

3. The integrated circuit of any one of claims 1-2, wherein the core region further comprises bridge circuits coupled to the first routers and to the second routers.

4. The integrated circuit of any one of claims 1-3 further comprising:
control circuits coupled to the first routers and to the second routers.

5. The integrated circuit of any one of claims 1-4, wherein the wide layer is configured to route a header, control information, and data.

6. The integrated circuit of any one of claims 1-5, wherein the narrow layer is configured to route control information and a header without data.

7. The integrated circuit of any one of claims 1-6, wherein the wide layer is configurable to route write requests, responses to read requests, and wide streaming communication packets.

8. The integrated circuit of any one of claims 1-7, wherein the narrow layer is configurable to route read requests, responses to write requests, and narrow streaming communication packets.

9. The integrated circuit of any one of claims 1-8, wherein the integrated circuit is a configurable logic integrated circuit, and wherein the logic circuits are configurable logic circuits.

10. A method for routing packets through a network in an integrated circuit, the method comprising:
providing first control information and data through a wide layer of the network between a first circuit in a core region of the integrated circuit and a second circuit in a peripheral region of the integrated circuit; and
providing second control information through a narrow layer of the network between a third circuit in the core region and a fourth circuit in the peripheral region.

11. The method of claim 10, wherein providing the first control information and the data through the wide layer comprises providing one of the packets comprising memory addresses, routing information, and the data through the wide layer.

12. The method of any one of claims 10-11, wherein providing the second control information through the narrow layer comprises providing one of the packets comprising memory addresses and routing information through the narrow layer without the narrow layer comprising bandwidth to route additional data.

13. The method of any one of claims 10-12 further comprising performing clock crossing, data rate matching, encoding, and decoding at the first circuit for the first control information and the data.

14. The method of any one of claims 10-13 further comprising performing clock crossing, data rate matching, encoding, and decoding at the third circuit for the second control information.

15. The method of any one of claims 10-14, wherein the network is routed around a periphery of the core region.
